# EUROPEAN PATENT APPLICATION

(11) **EP 4 372 630 A1**
(43) Date of publication of application: **22.05.2024**
(21) Application number: 23191634.7
(22) Date of filing: 16.08.2023
(51) Int. Cl.: G06N 20/00

(54) **MEDIUM STORING DATA GENERATION PROGRAM, DATA GENERATION METHOD, AND DATA GENERATION DEVICE**

(30) Priority: 16.11.2022 JP 2022183670
(71) Applicant: Fujitsu Limited, Kawasaki-shi, Kanagawa 211-8588 (JP)
(72) Inventor: Sonoda, Ryosuke, Kawasaki-shi, Kanagawa 211-8588 (JP)
(74) Representative: Hoffmann Eitle

(57) **Abstract**

A data generation program including instructions which when executed by a computer, cause the computer to execute processing including: selecting, based on first distribution of data included in a first data group in which a value of a first attribute is a first value among a plurality of data groups obtained by classifying a plurality of pieces of data based on an attribute, first data from a second data group in which the value of the first attribute is a second value among the plurality of data groups; and generating new data in which the value of the first attribute is the second value based on the first data.

## Description

### FIELD

The embodiment discussed herein is related to a data generation program, a data generation method, and a data generation device.

### BACKGROUND

In recent years, determination using a machine learning model has been utilized in a decision-making process such as pass/fail assessment of a university entrance examination or credit determination of a bank. The machine learning model carries out machine learning using a feature and a class (pass/fail, propriety of credit, etc.) included in each of a plurality of pieces of training data, thereby enabling appropriate class classification from input features.

In the plurality of pieces of training data, attributes such as the class and the group are frequently biased. For example, the class may be biased to a specific class, such as failed statuses increase with respect to passed statuses. Furthermore, the group may be biased to a specific group, such as males increase with respect to females in a group of males and females and the like.

Such bias in the plurality of pieces of training data is known as a problem that training of a small number of classes or groups does not progress at the time of training of the machine learning model so that accuracy in class classification deteriorates. As an existing technique for this problem, there is a data oversampling technique that attempts to improve the accuracy by newly generating data of the small number of classes or groups to complement the plurality of pieces of training data.

International Publication Pamphlet No. WO 2022/044064, International Publication Pamphlet No. WO 2018/079020, U.S. Patent Application Publication No. 2021/0158094, and U.S. Patent Application Publication No. 2020/0380309 are disclosed as related art.

### SUMMARY

### TECHNICAL PROBLEM

However, the existing technique described above has a problem that the oversampling causes overlap in which data overlaps between different classes.

In one aspect, an object is to provide a data generation program, a data generation method, and a data generation device capable of suppressing overlap at a time of performing oversampling on training data.

### SOLUTION TO PROBLEM

According to an aspect of the embodiments, there is provided a data generation program including instructions which when executed by a computer, cause the computer to execute processing including: selecting, based on first distribution of data included in a first data group in which a value of a first attribute is a first value among a plurality of data groups obtained by classifying a plurality of pieces of data based on an attribute, first data from a second data group in which the value of the first attribute is a second value among the plurality of data groups; and generating new data in which the value of the first attribute is the second value based on the first data.

### ADVANTAGEOUS EFFECTS OF INVENTION

The overlap at the time of performing the oversampling on the training data may be suppressed.

### BRIEF DESCRIPTION OF DRAWINGS

FIG. 1A is an explanatory diagram for explaining an outline of data generation by a data generation device according to an embodiment;
FIG. 1B is an explanatory diagram for explaining a case of performing the data generation in consideration of a rate of vicinities belonging to a same class;
FIG. 1C is an explanatory diagram for explaining the case of performing the data generation in consideration of the rate of the vicinities belonging to the same class;
FIG. 2 is a block diagram illustrating an exemplary functional configuration of the data generation device according to the embodiment;
FIG. 3 is a flowchart illustrating exemplary operation of the data generation device according to the embodiment;
FIG. 4 is a flowchart illustrating exemplary operation related to the data generation of the data generation device according to the embodiment;
FIG. 5 is an explanatory diagram for explaining an example of the data generation by the data generation device according to the embodiment;
FIG. 6 is an explanatory diagram for explaining evaluation metrics;
FIG. 7 is an explanatory diagram for explaining an exemplary evaluation result;
FIG. 8 is an explanatory diagram for explaining an exemplary computer configuration;
FIG. 9 is an explanatory diagram for explaining existing data generation;
FIG. 10 is an explanatory diagram for explaining correction of imbalance based on the existing data generation; and
FIG. 11 is an explanatory diagram for explaining occurrence of overlap according to the existing data generation.

### DESCRIPTION OF EMBODIMENTS

Hereinafter, a data generation program, a data generation method, and a data generation device according to an embodiment will be described with reference to the drawings. Configurations having the same functions in the embodiment are denoted by the same reference signs, and redundant description will be omitted. Note that the data generation program, the data generation method, and the data generation device to be described in the following embodiment are merely examples, and do not limit the embodiment. Furthermore, each embodiment below may be appropriately combined unless otherwise contradicted.

### (Occurrence of Overlap)

Here, occurrence of overlap will be described using, as an example, existing data generation that performs oversampling on training data using a fair synthetic minority oversampling technique (FSMOTE).

Note that training data is assumed to be D = {X, Y, A} in the following descriptions. Here, X represents a feature, Y represents a class, and A represents a group. Furthermore, composite data newly generated by the oversampling is assumed to be S = {X^{S}, Y^{S}, A^{S}}. Furthermore, the training data after the oversampling is a sum (D = D ∪ S) of the original training data D and the composite data S.

According to the FSMOTE, the training data D is divided by the class (Y) and the group (A) to form a cluster (data group). Here, the class (Y) is assumed to be Y = {positive example, negative example}. Furthermore, the group (A) is assumed to be A = {male, female}. Then, composite data is generated using a synthetic minority over-sampling technique (SMOTE) so that the sizes (number of pieces of data) of all the divided clusters become equal.

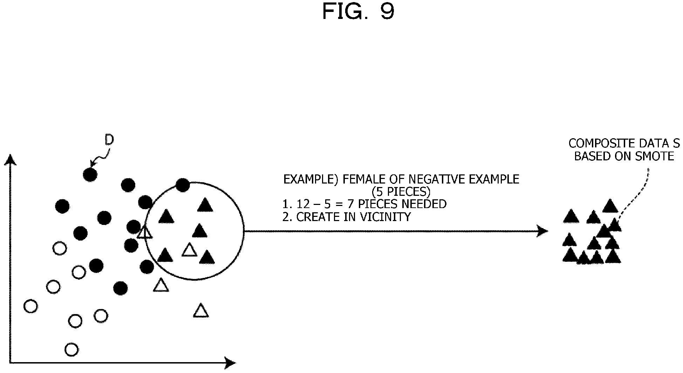

FIG. 9 is an explanatory diagram for explaining the existing data generation. In FIG. 9, the training data D is plotted based on two-dimensional features (X) for visualization. Furthermore, open marks and black marks in the training data D indicate classes (Y = {positive example, negative example}). The open marks correspond to positive examples, and the black marks correspond to negative examples. Furthermore, shapes (circle and triangle) in the training data D indicate groups (A = {male, female}). The circles correspond to males, and the triangles correspond to females.

According to the FSMOTE, the oversampling for generating composite data using the SMOTE is performed on a cluster (also referred to as minority cluster) other than a cluster (also referred to as majority cluster) having the largest size. For example, with respect to the majority cluster (males of negative examples, 12 pieces of data), 12 - 7 pieces of composite data are generated for the minority cluster of females of negative examples (5 pieces).

The SMOTE generates the composite data based on the data in the cluster (minority cluster) to be subject to the oversampling. Specifically, the SMOTE generates composite data (S) in which X^{S} = Xᵢ + r(Xⱼ - Xᵢ), Y^{S} = Yᵢ, and A^{S} = Aᵢ = Aⱼ for optionally selected data (i) and data (j) in the vicinity thereof (r represents a random number of [0, 1]). In short, the SMOTE randomly generates a new data point over a straight line connecting a certain data point and a data point in the vicinity thereof in the cluster to be subject to the oversampling.

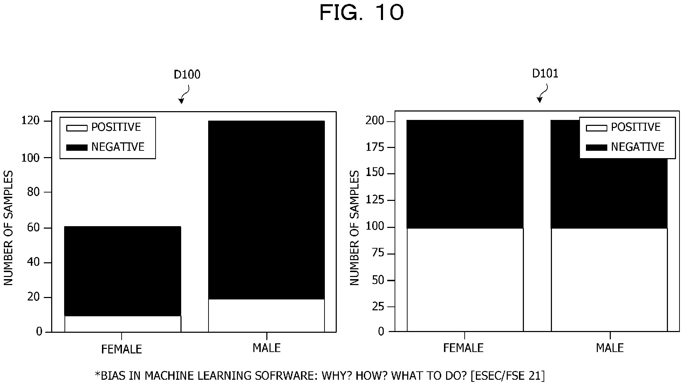

FIG. 10 is an explanatory diagram for explaining correction of imbalance based on the existing data generation. As illustrated in FIG. 10, in training data D100 before the oversampling, an imbalance occurs in the number of samples between the clusters of the class (Y = {positive example, negative example}) and the group (A = {male, female}). In contrast, in training data D101 after the oversampling, the imbalance between the clusters described above is resolved.

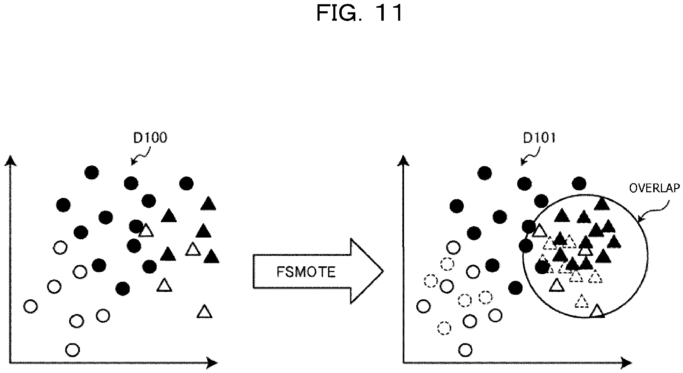

FIG. 11 is an explanatory diagram for explaining occurrence of overlap according to the existing data generation. As illustrated in FIG. 11, according to the existing data generation, the composite data (dotted line) is generated based on the data in the cluster (e.g., females of negative examples) having a small size and large variance, which causes overlap in which data overlaps between different classes (e.g., females of positive examples).

In a case of training the machine learning model using the training data D101 in which such overlap occurs, the boundary between the classes becomes blurry so that the classification by the machine learning model tends to fail. Furthermore, since no overlap occurs in males as compared with females, fairness of the classification by the machine learning model may deteriorate.

### (Outline of Embodiment)

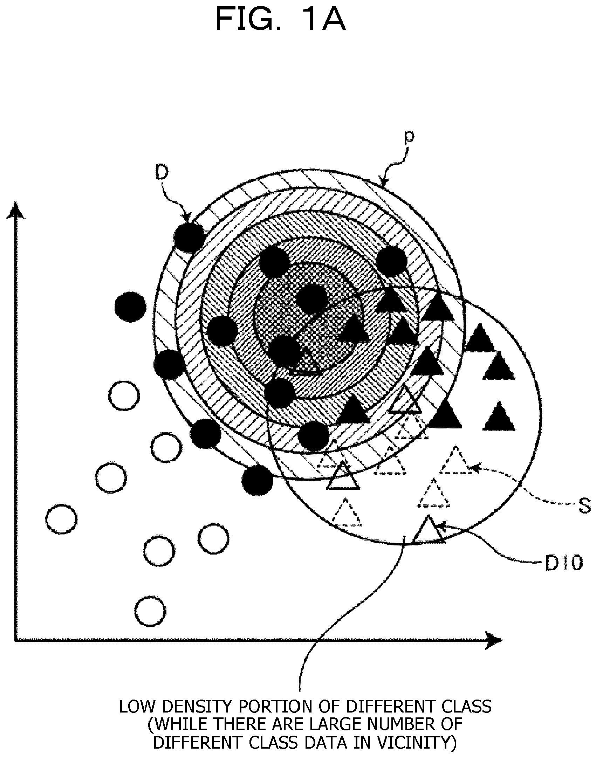

FIG. 1A is an explanatory diagram for explaining an outline of data generation by the data generation device according to the embodiment. Note that. in FIG. 1A, the training data D is plotted based on two-dimensional features (X) for visualization. Furthermore, in a similar manner to FIG. 9, open marks and black marks in the training data D indicate classes (Y = {positive example, negative example}), and shapes thereof (circle and triangle) indicate groups (A = {male, female}).

As illustrated in FIG. 1A, the data generation device according to the embodiment generates the composite data S related to the minority cluster (females of positive examples and females of negative examples in the illustrated example) for a plurality of clusters (data groups) obtained by classifying a plurality of pieces of the training data D based on attributes (class and group).

Here, the data generation device according to the embodiment selects origin data D10 from the data in the minority cluster based on distribution (density p) of the majority cluster (males of positive examples and males of negative examples in the illustrated example). Specifically, the data generation device according to the embodiment obtains the distribution (density p) of the majority cluster with the attribute (different class) different from that of the minority cluster. Then, the data generation device according to the embodiment evaluates a distance from the obtained distribution in a feature space, and selects the origin data D10 in descending order of the distance.

As an example, the data generation device according to the embodiment obtains, for the females of the positive examples (open triangles), the density p of the cluster of the males of the negative examples (black circles), which is the majority cluster of a different class. Then, the data generation device according to the embodiment obtains a distance between the obtained distribution (density p) and the data of the females of the positive examples in the feature space, and selects the origin data D10 based on an evaluation result of the obtained distance.

Then, the data generation device according to the embodiment generates new composite data S having the same attribute based on the selected origin data D10. Specifically, the data generation device according to the embodiment generates the new composite data S with respect to the origin data D10 based on the distribution (density) of the majority cluster of the same class as the origin data D10.

More specifically, the data generation device according to the embodiment obtains the distribution (density) of the majority cluster of the same class as the origin data D10, and obtains the distance from the origin data D10 to the distribution in the feature space. Then, the data generation device according to the embodiment generates the composite data S at a position where the distance to the origin data D10 is equal.

As an example, the data generation device according to the embodiment obtains, for the origin data D10 selected for the females of the positive examples (open triangles), the distribution (density) of the cluster of the males of the positive examples (open circles), which is the majority cluster of the same class. Then, the data generation device according to the embodiment obtains the distance between the obtained distribution (density) and the data of the females of the positive examples in the feature space. Then, the data generation device according to the embodiment randomly generates the composite data S at a concentric position where the distance of the feature space is the same as the obtained distance with respect to the origin data D10. Note that the concentric width for generating the composite data S may be adjusted by a hyperparameter or the like.

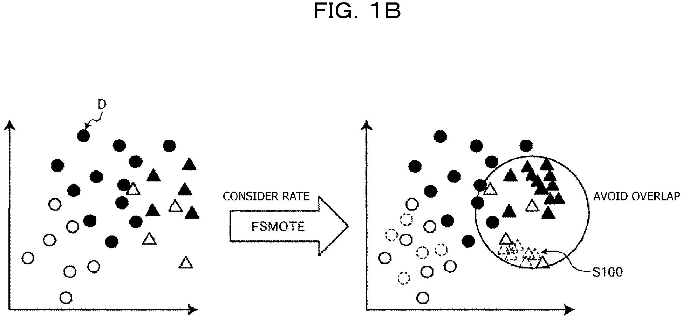

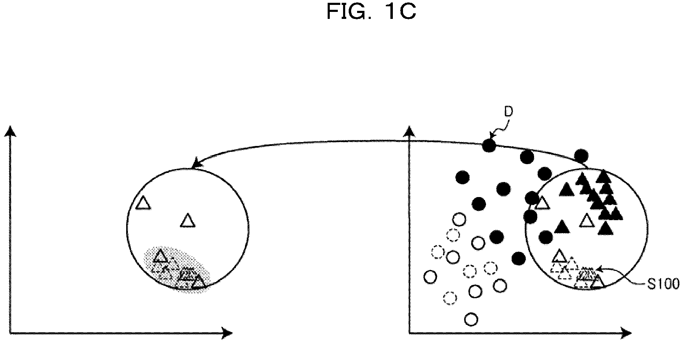

FIGs. 1B and 1C are explanatory diagrams for explaining a case of performing the data generation in consideration of a rate of vicinities belonging to the same class. As illustrated in FIG. 1B, here, a case of generating composite data S100 at a position having high local density in consideration of the rate of vicinities belonging to the same class (local density) in the minority cluster is verified for comparison.

Even in the case of generating the composite data S100 in this manner, it becomes possible to avoid data overlap. However, in this case, the composite data S100 may be generated from a small portion of data (dense data) in the minority cluster (sparse data is considered as noise) as illustrated in FIG. 1C. Thus, information loss of the minority cluster occurs, and overfitting or the like may occur in the machine learning model trained by the training data after the oversampling.

As illustrated in FIG. 1A, the data generation device according to the embodiment selects the origin data D10 from the data in the minority cluster based on the distribution (density p) of the majority cluster with the attribute (different class) different from that of the minority cluster. As described above, according to the data generation device according to the embodiment, it becomes possible to select the origin data D10 without depending on the local density of the data in the minority cluster. Furthermore, since the origin data D10 is selected based on the distribution (density p) of the majority cluster of a class different from that of the minority cluster, occurrence of overlap may be suppressed for the composite data S generated based on the origin data D10.

Furthermore, the data generation device according to the embodiment generates new composite data S with respect to the origin data D10 based on the distribution (density) of the majority cluster of the same class as the origin data D10, whereby the data generation may be performed without depending on the vicinity of the data in the minority cluster. Furthermore, according to the data generation device according to the embodiment, it becomes possible to generate the new composite data S at the position of the feature space corresponding to the distribution of the majority cluster of the same class, and to avoid a situation where generation of the composite data S is limited to the interpolation point with data in the vicinity.

### (Functional Configuration of Data Generation Device According to Embodiment)

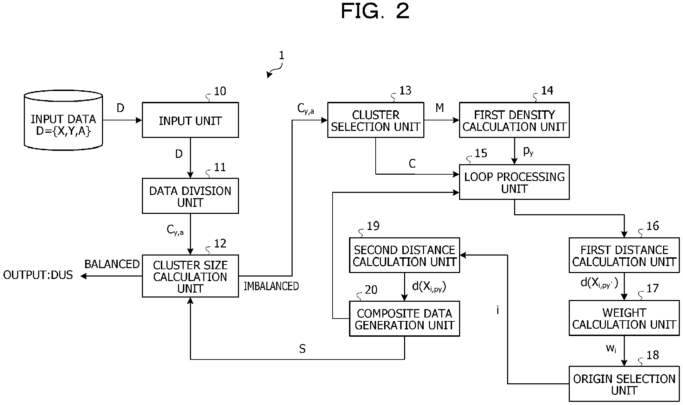

FIG. 2 is a block diagram illustrating an exemplary functional configuration of the data generation device according to the embodiment. As illustrated in FIG. 2, a data generation device 1 includes an input unit 10, a data division unit 11, a cluster size calculation unit 12, a cluster selection unit 13, a first density calculation unit 14, a loop processing unit 15, a first distance calculation unit 16, a weight calculation unit 17, an origin selection unit 18, a second distance calculation unit 19, and a composite data generation unit 20.

The input unit 10 is a processing unit that receives input data (training data D). Specifically, the input unit 10 receives inputs of a plurality of pieces of training data D for each case, and outputs the received training data D to the data division unit 11. Each piece of the training data D has a feature (X), a class (Y), and a group (A).

The data division unit 11 is a processing unit that divides the plurality of pieces of training data D based on the attributes of the class (Y) and the group (A) to form clusters (data groups). The data division unit 11 divides the plurality of pieces of training data D into clusters C_{y,a} related to a certain class (y) and a certain group (a).

For example, the training data D is assumed to have the attributes of the class (Y = {positive example, negative example}) and the group (A = {male, female}). In this case, the data division unit 11 divides the training data D into C_{positive example,male}, C_{negative example,male}, C_{positive example,female}, and C_{negative example,female}.

The cluster size calculation unit 12 is a processing unit that calculates a size (number of pieces of data) of each cluster C_{y,a}. Specifically, the cluster size calculation unit 12 counts the number of pieces of data in each of the divided clusters C_{y,a} to obtain a size. When there is an imbalance in the number of pieces of data among the individual clusters C_{y,a}, the cluster size calculation unit 12 outputs the data of each of the clusters C_{y,a} to the cluster selection unit 13 to start a process of generating the composite data S.

The cluster size calculation unit 12 outputs the sum (D = D ∪ S) of the training data D and the composite data S when the number of pieces of data among the individual clusters C_{y,a} is balanced due to the oversampling by the composite data S or the like.

The cluster selection unit 13 is a processing unit that selects a cluster based on the data of the individual clusters C_{y,a}. Specifically, the cluster selection unit 13 selects, as a majority cluster (M), a cluster having the largest size from among the individual clusters C_{y,a}. The cluster selection unit 13 outputs data of the selected majority cluster (M) to the first density calculation unit 14.

Furthermore, the cluster selection unit 13 selects a cluster other than the majority cluster (M) among individual clusters as a minority cluster (C_{y,a} ∈ C) to be subject to the oversampling. The cluster selection unit 13 outputs data of the selected minority cluster (C) to the loop processing unit 15.

The first density calculation unit 14 is a processing unit that calculates distribution (density p_{y}) of clusters (C_{y,a} ∈ M) belonging to the majority cluster (M) among the individual clusters C_{y,a}. For example, the first density calculation unit 14 calculates a value related to the distribution (density p_{y}) by a parametric method (e.g., calculation of average or median value) based on the data in the cluster. Note that the calculation of the distribution (density p_{y}) by the first density calculation unit 14 may be carried out using a non-parametric method (e.g., kernel density estimation).

Note that the calculation method in the first density calculation unit 14 may be appropriately selected by a user. For example, according to the parametric calculation method, the value related to the distribution (density p_{y}) may be inaccurate while the calculation lost is low. On the other hand, according to the non-parametric calculation method, the value related to the distribution (density p_{y}) may be more accurate than that in the parametric calculation method while the calculation cost is high.

The loop processing unit 15 is a processing unit that loops the process of generating the composite data S an optional number of times (β). As a result, the data generation device 1 generates the composite data S for the number of times of the loop.

Specifically, the loop processing unit 15 sets the number of times (β) of the loop based on a difference between the number of pieces of data of the majority cluster (M) and the number of pieces of data of the minority cluster (C_{y,a} ∈ C) to be subject to the oversampling. More specifically, the loop processing unit 15 directly sets the value of the difference as the number of times (β) of the loop. As a result, the data generation device 1 is enabled to generate the composite data S such that the number of pieces of data of the minority cluster (C_{y,a}) matches the number of pieces of data of the majority cluster (M).

The first distance calculation unit 16 is a processing unit that calculates a distance in the feature space between the minority cluster (C_{y,a}) to be subject to the oversampling and distribution (density p_{y'}) of a majority cluster having a class different from that of the cluster. Specifically, the first distance calculation unit 16 calculates a distance d(Xᵢ, p_{y'}) between the density p_{y'} and the feature Xᵢ of the data point (i ∈ C_{y,a}) of the minority cluster (C_{y,a}) (where y ≠ y').

Note that a method of calculating the distance may be any of the Euclidean metric that obtains a common distance in the feature space, the Mahalanobis metric that obtains a distance in consideration of correlation, the heterogeneous value difference metric that obtains a distance in consideration of a feature property, and the like.

The weight calculation unit 17 is a processing unit that calculates a weight (Wᵢ) proportional to the distance d(Xᵢ, p_{y'}) obtained by the first distance calculation unit 16 for each data point (i ∈ C_{y,a}) of the minority cluster (C_{y,a}). Specifically, the weight calculation unit 17 calculates the weight (Wᵢ) as a ratio of the distance of the data point (i ∈ C_{y,a}) to the total distance or the like.

The origin selection unit 18 is a processing unit that selects the origin data D10 from among the data points (i ∈ C_{y,a}) of the minority cluster (C_{y,a}) based on the weight (Wᵢ) proportional to the distance d(Xᵢ, p_{y'}). Specifically, the origin selection unit 18 selects the origin data D10 in descending order of the distance, and outputs the selected origin data D10 (value of i indicating the origin) to the second distance calculation unit 19.

The second distance calculation unit 19 is a processing unit that calculates a distance in the feature space between the selected origin data D10 and the distribution (density p_{y}) of the minority cluster having the class of the same attribute. Specifically, the second distance calculation unit 19 calculates the distance d(Xᵢ, p_{y}) between the density p_{y} and the feature Xᵢ related to the origin data D10 by a calculation method similar to that of the first distance calculation unit 16.

The composite data generation unit 20 is a processing unit that generates the composite data S with respect to the origin data D10 based on the distance d(Xᵢ, p_{y}) calculated by the second distance calculation unit 19. Specifically, the composite data generation unit 20 generates the composite data S at such a position in the feature space that the feature X_{S} of the composite data S satisfies d(Xᵢ, p_{y}) = d(X^{S}, p_{y}). Note that the class and the group in the composite data S are assumed to be the same (Y^{S} = Yᵢ, A^{S} = Aᵢ) as the origin data D10.

### (Exemplary Operation of Data Generation Device According to Embodiment)

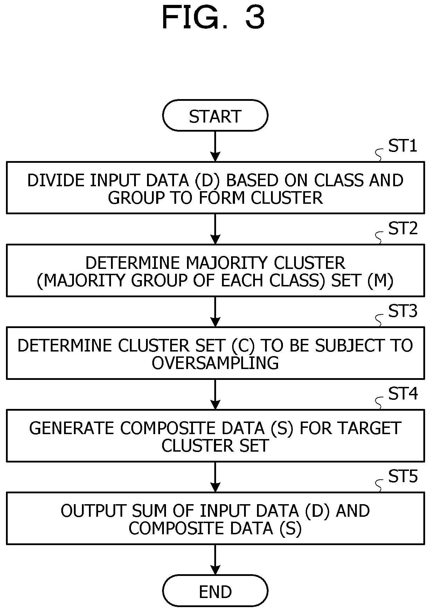

FIG. 3 is a flowchart illustrating exemplary operation of the data generation device 1 according to the embodiment. As illustrated in FIG. 3, when the process starts, the data generation device 1 forms clusters (C_{y,a}) by dividing, using the data division unit 11, input data (training data D) based on a class (Y) and a group (A) (ST1). Here, it is assumed that there is an imbalance in the number of pieces of data in the formed clusters (C_{y,a}).

Next, the cluster selection unit 13 determines a majority cluster (majority group of each class) set (M) from among the clusters (C_{y,a}) (ST2).

Next, the cluster selection unit 13 determines clusters other than the majority cluster (M) as a minority cluster set (C) to be subject to oversampling (ST3).

Next, the data generation device 1 generates composite data (S) for the minority cluster set (C) to be subject to the oversampling (ST4). Next, the data generation device 1 outputs a sum of the input data (D) and the composite data (S) (ST5).

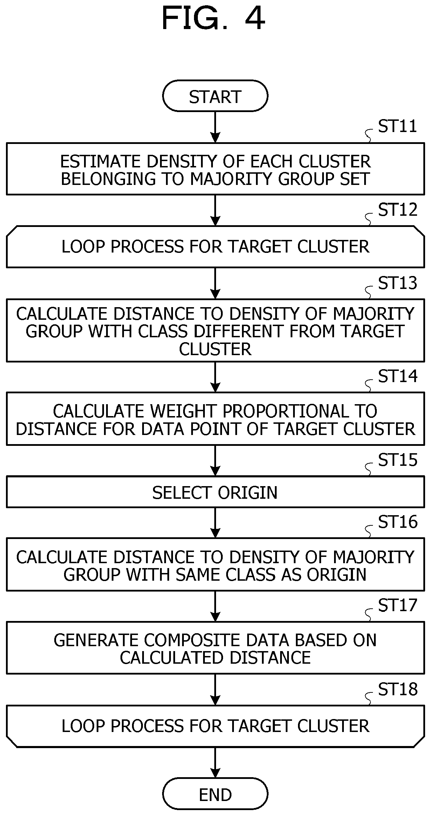

FIG. 4 is a flowchart illustrating exemplary operation related to the data generation of the data generation device 1 according to the embodiment. As illustrated in FIG. 4, when the process related to the data generation starts, the first density calculation unit 14 estimates (calculates) the density p_{y} of each cluster (C_{y,a} ∈ M) belonging to the majority group set (ST11).

Next, the loop processing unit 15 causes a loop process (ST12 to ST18) to be performed an optional number of times (β) for the minority cluster (C_{y,a} ∈ C) to be subject to the oversampling. Specifically, the loop processing unit 15 causes the loop process to be performed the number of times corresponding to the difference between the number of pieces of data of the majority cluster (M) and the number of pieces of data of the minority cluster (C_{y,a} ∈ C).

When the loop process starts, the first distance calculation unit 16 calculates the distance d(Xᵢ, p_{y'}) between the minority cluster (C_{y,a}) to be subject to the oversampling and the density (p_{y'}) of the majority group having a class different from that of the cluster (ST13).

Next, the weight calculation unit 17 calculates a weight (Wᵢ) proportional to the distance d(Xᵢ, p_{y'}) for the data point of the minority cluster (C_{y,a}) to be subject to the oversampling (ST14).

Next, the origin selection unit 18 selects the origin (origin data D10) according to the weight (Wᵢ) proportional to the distance d(Xᵢ, p_{y'}) from among the data points of the minority cluster (C_{y,a}) to be subject to the oversampling (ST15).

Next, the second distance calculation unit 19 calculates a distance d(Xᵢ, p_{y}) between the origin and the density (p_{y}) of the majority group having the same class as the origin (ST16). Next, the composite data generation unit 20 generates composite data S for complementing the minority cluster (C_{y,a}) to be subject to the oversampling based on the distance d(Xᵢ, p_{y}) calculated by the second distance calculation unit 19 (ST17).

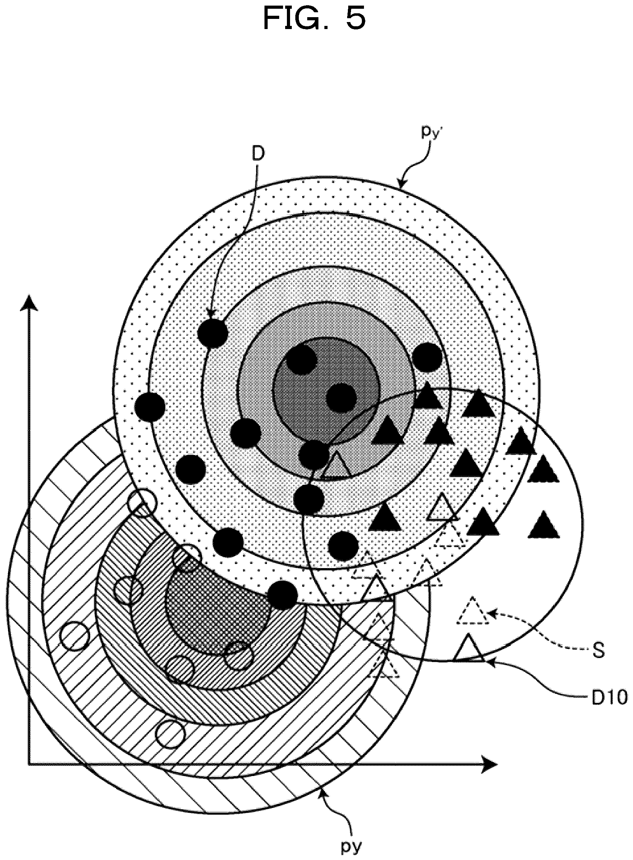

FIG. 5 is an explanatory diagram for explaining an example of the data generation by the data generation device according to the embodiment. In a similar manner to FIG. 1A, FIG. 5 is a diagram in which the training data D is plotted based on two-dimensional features (X) for visualization, and the plotted training data D is assumed to be the same as that in FIG. 1A.

As illustrated in FIG. 5, the minority cluster to be subject to the oversampling is assumed to be C_{positive example,female}. The data generation device 1 selects the origin data D10 from among the data points in the target cluster based on the density (p_{y'}) of the majority group (C_{negative example,male}) having a class different from that of the target cluster (C_{positive example,female}).

Then, the data generation device 1 estimates (calculates) the density (p_{y}) of the majority group (C_{positive example,male}) of the same class as the origin data D10. Then, the data generation device 1 generates, based on the distribution (p_{y}) of the majority cluster of the same class as the origin data D10, the composite data S at a position where the distance between the distribution of the majority cluster and the origin data D10 is the same.

In the case of the FSMOTE, the composite data S is generated linearly between two points (e.g., between origin point and neighboring point thereof), and the range for the generation is limited. On the other hand, according to the data generation device 1, the composite data S may be generated in a state of being distributed to a position where the distance between the distribution of the majority cluster and the origin data D10 is the same, which is in a certain concentric range.

### (Evaluation Results)

Here, an evaluation result of the machine learning model trained using the training data D after the oversampling by the data generation device 1 will be described. It is assumed that test data Dₜₑₛₜ prepared separately from the training data D is used for the evaluation (test data Dₜₑₛₜ is unobserved data not included in the training data D). Specifically, a classification result obtained by applying the test data Dₜₑₛₜ to the trained machine learning model is evaluated using evaluation metrics.

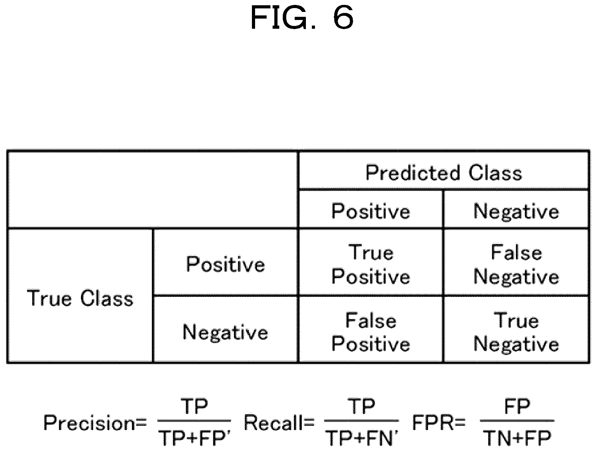

FIG. 6 is an explanatory diagram for explaining the evaluation metrics. As illustrated in FIG. 6, according to the evaluation using the evaluation metrics, it is determined which of true positive (TP), false negative (FN), false positive (FP), and true negative (TN) the classification result corresponds to, and a quantity of each of TP, FN, FP, and TN is obtained. Then, evaluation values such as Precision, Recall, and FPR are obtained based on the obtained quantities.

Then, accuracy and fairness are evaluated based on the obtained evaluation values. Examples of the accuracy include (1) F1 = 2Precision × Recall/(Precision + Recall), (2) Area Under the Recall-FPR (ROC) Curve, and the like. Furthermore, examples of the fairness include (1) Equal Opportunity = Recall|_{A=a} - Recall|_{A=a'}, (2) Equalized Odds = (Recall + FPR)_{|A=a} - (Recall + FPR)_{|A=a'}, and the like.

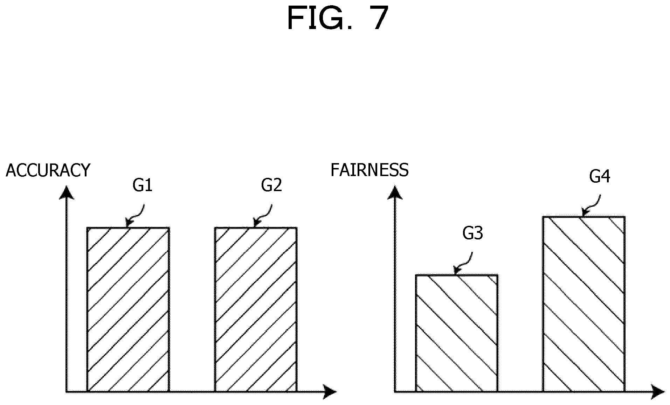

FIG. 7 is an explanatory diagram for explaining an exemplary evaluation result. Graphs G1 and G3 on the left side in FIG. 7 illustrate evaluation results of the machine learning model trained using the training data D after the oversampling by existing data generation. Furthermore, graphs G2 and G4 on the right side in FIG. 7 illustrate evaluation results of the machine learning model trained using the training data D after the oversampling by the data generation device 1.

As illustrated in FIG. 7, according to the machine learning model trained using the training data D after the oversampling by the data generation device 1, both of the accuracy and the fairness in the classification are favorable (there is no deterioration in the classification fairness), and the trade-off between the accuracy and the fairness is improved.

### (Effects)

As described above, the data generation device 1 selects, based on first distribution of data included in a first data group in which a value of a first attribute is a first value among a plurality of data groups (C_{y,a}) obtained by classifying a plurality of pieces of training data D based on attributes, first data (origin data) from a second data group in which the value of the first attribute is a second value among the plurality of data groups. The data generation device 1 generates new data (composite data S) in which the value of the first attribute is the second value based on the selected first data.

As a result, the data generation device 1 is enabled to suppress overlap of the new data (composite data S) with the first data group in which the value of the first attribute is the first value, and to suppress overlap at the time of performing oversampling on the training data D.

Furthermore, a second attribute has a third value in the first data group, the second attribute has a fourth value in the second data group, and the number of pieces of data of the first data group is larger than that of the data group in which the first attribute has the first value and the second attribute has the fourth value. As described above, the origin data is selected based on the first distribution of the data included in the first data group (majority group) having a larger number of pieces of data (number of samples), whereby the origin data may be selected more accurately.

Furthermore, the data generation device 1 generates new data based on second distribution of data included in a data group in which the first attribute has the second value, the second attribute has the third value, and the number of pieces of data is larger than that of the second data group. As described above, the new data is generated based on the second distribution of the data included in the data group (majority group) having a larger number of pieces of data (number of samples) than the second data group, whereby the new data may be generated more accurately.

Furthermore, the data generation device 1 selects a plurality of pieces of origin data in descending data order of distance to the first distribution from the second data group. As described above, the origin data is selected in descending data order of the distance to the first distribution, whereby overlap of the new data generated based on the origin data with other pieces of data may be suppressed.

Furthermore, the data generation device 1 generates new pieces of data of a number based on a difference between the number of pieces of data of the second data group and the number of pieces of data of the data group having a larger number of pieces of data than the second data group among the plurality of data groups. As a result, the data generation device 1 is enabled to generate the new data such that the number of pieces of data of the second data group matches the number of pieces of data of another data group, for example.

### (Others)

Note that each of the illustrated components in each of the devices is not necessarily physically configured as illustrated in the drawings. In other words, specific modes of distribution and integration of each device are not limited to those illustrated, and the whole or a part of the device may be configured by being functionally or physically distributed or integrated in any unit depending on various loads, use situations, and the like.

Furthermore, all or any part of the various processing functions of the input unit 10, the data division unit 11, the cluster size calculation unit 12, the cluster selection unit 13, the first density calculation unit 14, the loop processing unit 15, the first distance calculation unit 16, the weight calculation unit 17, the origin selection unit 18, the second distance calculation unit 19, and the composite data generation unit 20 of the data generation device 1 may be executed by a central processing unit (CPU) (or microcomputer such as micro processing unit (MPU), micro controller unit (MCU), etc.). Furthermore, it is needless to say that all or any part of the various processing functions may be executed by a program analyzed and executed by the CPU (or microcomputer such as MPU, MCU, etc.) or by hardware based on wired logic. Furthermore, the various processing functions implemented by the data generation device 1 may be executed by a plurality of computers in cooperation through cloud computing.

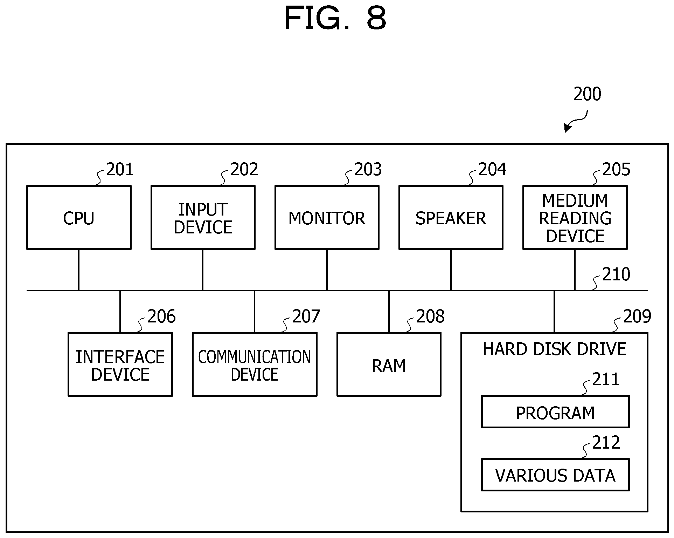

Meanwhile, various types of processing described in the embodiment above may be implemented by a computer executing a program prepared beforehand. Thus, hereinafter, an exemplary computer configuration (hardware) for executing a program having functions similar to those of the embodiment described above will be described. FIG. 8 is an explanatory diagram for explaining an exemplary computer configuration.

As illustrated in FIG. 8, a computer 200 includes a CPU 201 that executes various types of arithmetic processing, an input device 202 that receives data input, a monitor 203, and a speaker 204. Furthermore, the computer 200 includes a medium reading device 205 that reads a program or the like from a storage medium, an interface device 206 to be coupled to various devices, and a communication device 207 to be coupled to and communicate with an external device in a wired or wireless manner. Furthermore, the data generation device 1 includes a random access memory (RAM) 208 that temporarily stores various types of information, and a hard disk drive 209. Furthermore, each of the units (201 to 209) in the computer 200 is coupled to a bus 210.

The hard disk drive 209 stores a program 211 for executing various types of processing in the functional configurations (e.g., input unit 10, data division unit 11, cluster size calculation unit 12, cluster selection unit 13, first density calculation unit 14, loop processing unit 15, first distance calculation unit 16, weight calculation unit 17, origin selection unit 18, second distance calculation unit 19, and composite data generation unit 20) described in the embodiment above. Furthermore, the hard disk drive 209 stores various types of data 212 to be referred to by the program 211. The input device 202 receives, for example, an input of operation information from an operator. The monitor 203 displays, for example, various screens to be operated by the operator. For example, a printing device and the like are coupled to the interface device 206. The communication device 207 is coupled to a communication network such as a local area network (LAN), and exchanges various types of information with an external device via the communication network.

The CPU 201 reads the program 211 stored in the hard disk drive 209, and loads it into the RAM 208 for execution, thereby performing various types of processing related to the functional configurations (e.g., input unit 10, data division unit 11, cluster size calculation unit 12, cluster selection unit 13, first density calculation unit 14, loop processing unit 15, first distance calculation unit 16, weight calculation unit 17, origin selection unit 18, second distance calculation unit 19, and composite data generation unit 20) described above. In other words, the CPU 201 is an exemplary control unit. Note that the program 211 is not necessarily stored in the hard disk drive 209. For example, the program 211 stored in a storage medium readable by the computer 200 may be read and executed. The storage medium readable by the computer 200 corresponds to, for example, a portable recording medium such as a compact disc read-only memory (CD-ROM), a digital versatile disc (DVD), or a universal serial bus (USB) memory, a semiconductor memory such as a flash memory, a hard disk drive, or the like. Furthermore, the program 211 may be prestored in a device coupled to a public line, the Internet, a LAN, or the like, and the computer 200 may read the program 211 from such a device to execute it.

## Claims

1. A data generation program comprising instructions which when executed by a computer, cause the computer to execute processing comprising:
selecting, based on first distribution of data included in a first data group in which a value of a first attribute is a first value among a plurality of data groups obtained by classifying a plurality of pieces of data based on an attribute, first data from a second data group in which the value of the first attribute is a second value among the plurality of data groups; and
generating new data in which the value of the first attribute is the second value based on the first data.

2. The data generation program according to claim 1, wherein
a second attribute has a third value in the first data group and the second attribute has a fourth value in the second data group, and
a number of pieces of the data in the first data group is larger than a number of pieces of data in a data group in which the first attribute has the first value and the second attribute has the fourth value.

3. The data generation program according to claim 2, wherein
the generating includes generating the new data based on second distribution of data included in a data group in which the first attribute has the second value and the second attribute has the third value, the data group having a larger number of pieces of data than a number of pieces of data in the second data group.

4. The data generation program according to claim 1, wherein
the selecting includes selecting a plurality of pieces of the first data in descending data order of a distance to the first distribution from the second data group.

5. The data generation program according to claim 1, wherein
the generating includes generating the new data of a number based on a difference between a number of pieces of data in the second data group and a number of pieces of data in a data group that has a larger number of pieces of data than the number of pieces of data in the second data group among the plurality of data groups.

6. A data generation method implemented by a computer, the data generation method comprising:
selecting, based on first distribution of data included in a first data group in which a value of a first attribute is a first value among a plurality of data groups obtained by classifying a plurality of pieces of data based on an attribute, first data from a second data group in which the value of the first attribute is a second value among the plurality of data groups; and
generating new data in which the value of the first attribute is the second value based on the first data.

7. A data generation apparatus comprising a control unit configured to perform processing including:
selecting, based on first distribution of data included in a first data group in which a value of a first attribute is a first value among a plurality of data groups obtained by classifying a plurality of pieces of data based on an attribute, first data from a second data group in which the value of the first attribute is a second value among the plurality of data groups; and
generating new data in which the value of the first attribute is the second value based on the first data.
